# EUROPEAN PATENT SPECIFICATION

(11) **EP 2 260 912 B1**
(45) Date of publication and mention of the grant of the patent: **25.07.2012**
(21) Application number: 09716421.4
(22) Date of filing: 24.02.2009
(51) Int. Cl.: A63F 13/02, A63F 13/08

(54) **GAME CONTROLLER CASE**
SPIELSTEUERUNGSGEHÄUSE
BOÎTIER DE PÉRIPHÉRIQUE DE JEU

(30) Priority: 03.03.2008 JP 2008052593
(43) Date of publication of application: 15.12.2010
(73) Proprietor: Namco Bandai Games Inc., Shinagawa-ku Tokyo 140-8590 (JP)
(72) Inventor: NAKAJIMA, Nobutaka, Tokyo 140-8590 (JP)
(74) Representative: Emerson, Peter James
(86) International application number: PCT/JP2009/053264
(87) International publication number: WO 2009/110350

(56) References cited:
- EP-A1- 1 757 343
- JP-A- 2001 079 268
- JP-A- 2003 072 847
- JP-A- 2007 054 114
- JP-U- 3 124 992
- US-A1- 2003 083 129
- US-B1- 6 241 247
- "Wii boxing glove", INTERNET CITATION, 17 May 2007 (2007-05-17), pages 1-2, XP002505332, Retrieved from the Internet: URL:http://www.archive.org/web/20070517175 416/http://www.goldenshop.com.h k/Al-trad/wii/boxinglove.htm [retrieved on 2008-11-25]
- "Wii Remote", INTERNET CITATION, 9 February 2008 (2008-02-09), pages 1-17, XP002536289, Retrieved from the Internet: URL:http://en.wikipedia.org/w/index.php?ti tle=Wii_Remote&oldid=190155105 [retrieved on 2009-07-07]
- '[Game no Ana] Wii Sports o 10 Bai Tanoshimo! Motto Real ni Play suru Accessory de Asobo', [Online] 05 March 2007, Retrieved from the Internet: <URL:http:// news.livedoor.com/article/detail/3057829> [retrieved on 2009-04-28]
- SHUKAN FAMI TSU ET AL. ENTERBRAIN, INC. vol. 21, no. 50, 15 December 2006,
- 'Wii-yo Boxing Glove' SLASHGEAR JAPAN, [Online] 28 September 2007, XP008140937 Retrieved from the Internet: <URL:http://www.slashgear.jp/2007/09/post-1 673> [retrieved on 2009-04-28]

## Description

### TECHNICAL FIELD

The present invention relates to a game controller case that receives a game controller.

### BACKGROUND ART

A music game has been known as one type of game. The music game allows the player to enjoy virtual dancing or playing of a musical instrument by performing an action operation input (e.g., operating a dedicated controller that imitates a musical instrument or performing dance steps at a given timing) in rhythm and tempo.

The music game is normally played in a video arcade or the like, and the player normally plays the music game using a dedicated game device developed for business use. In recent years, a music game that allows the player to enjoy virtual playing of a Japanese drum or the like using a dedicated controller that is connected to a consumer game device has been developed, and has become popular since it allows family play (see Patent Document 1, for example). Patent Document 1: JP-A-2004-313764
Such a controller is known from EP-A1-1757343. A shaped container for such a controller is known from XP002505332 - http://www.archive.org/web/20070517175416/http://www.goldenshop.com.hk/Al-trad/wii/box inglove.htm

### DISCLOSURE OF THE INVENTION

When using a dedicated controller as disclosed in Patent Document 1, the controller must be provided with high durability against an action operation input (e.g., hitting operation). Therefore, man-hours and cost required for producing the controller increase in order to improve the structural strength of the controller or provide vibration-proof electronic components in the controller.

The invention was conceived in view of the above situation. An object of the invention is to enable game play that utilizes an action operation input (e.g., hitting or pushing) using a game controller attached to a consumer game device instead of a dedicated game controller.

A first invention that achieves the above object provides a game controller case characterized by: a buffer air chamber and an air inlet; wherein the buffer air chamber section inflates due to pressure of air introduced into the buffer air chamber section from the air inlet, and forms an inner space as a receiving section; the receiving section being configured to receive a game controller that includes an acceleration detection section and a transmission section that transmits a detection signal output from the acceleration detection section to a game device main body, and hold the game controller by coming in pressure contact with the game controller around the game controller.

According to the first invention, since the game controller can be enclosed by the buffer air chamber section having a buffer capability, an impact is not directly applied to the game controller (i.e., the game controller does not break) even if the game controller case is hit from the outside. The game controller includes the acceleration sensor, and the acceleration detection signal is transmitted to the game device main body. Therefore, the acceleration detection signal can be utilized as an operation input. This makes it possible to implement game play that utilizes an action operation input (e.g., hitting or pushing) using a game controller attached to a consumer game device instead of a dedicated game controller.

An appropriate shape of the receiving section can be obtained, even if the game controller has a complex shape, by employing a configuration in which the buffer air chamber section includes a plurality of sub-air chamber sections that form a given inner space upon assembly, and the receiving section is the inner space that is formed by the plurality of sub-air chamber sections (second invention).

If it is desired to easily place the game controller, it is preferable that the receiving section be a passage that is formed through the buffer air chamber section, and the buffer air chamber section hold the game controller that is inserted into the passage by coming in pressure contact with the game controller around the game controller (third invention).

Alternatively, the receiving section may be a depression that is formed in the buffer air chamber section and can receive the entire game controller, and the buffer air chamber section may hold the game controller that is inserted into the receiving section by coming in pressure contact with the game controller around the game controller (fourth invention).

If the game controller case further includes a switch cover section that can be removably fitted into the game controller, and prevents an erroneous operation of a switch included in the game controller (fifth invention), it is possible to prevent a situation in which the switch is erroneously pressed (i.e., an operation input that is not intended by the player is performed) when the game controller case is hit from the outside.

If the game controller case further includes an air inlet that is provided in the buffer air chamber section (sixth invention), the user can inflate the game controller case, as desired. Therefore, the game controller case can be stored, transported, and sold in a state in which the buffer air chamber is deflated.

If the game controller case further includes a cover section that covers an outer circumferential surface of the buffer air chamber section (seventh invention), damage to the buffer air chamber section can be prevented. Moreover, since the design of the game controller case can be arbitrarily changed, the game controller case can be used for various games.

If the buffer air chamber section is made of vinyl (eighth invention), the production cost can be reduced.

### BRIEF DESCRIPTION OF THE DRAWINGS

FIG. 1 is a configuration diagram showing a configuration example of a consumer game device.
FIG. 2A is a front view showing a game controller, FIG. 2B is a right side view showing a game controller, and FIG. 2C is a bottom view showing a game controller.
FIG. 3 is a perspective view showing a game controller case according a first embodiment.
FIG. 4A is a front view showing a switch cover, FIG. 4B is a cross-sectional view showing a switch cover along the line 4B-4B, and FIG. 4C is a bottom view showing a switch cover.
FIG. 5A is a front view showing a state in which a switch cover is fitted into a game controller, FIG. 5B is a left side view showing a state in which a switch cover is fitted into a game controller, and FIG. 5C is a bottom view showing a state in which a switch cover is fitted into a game controller.
FIG. 6A is a front view showing a case main body according to the first embodiment, and FIG. 6B is a side view showing a case main body according to the first embodiment.
FIG. 7A is a side view showing an upper case section, and FIG. 7B is a bottom view showing an upper case section.
FIG. 8A is a front view showing a lower case section, and FIG. 8B is a side view showing a lower case section.
FIG. 9A is a front view showing a cover, and FIG. 9B is a cross-sectional view showing a cover along the line 9B-9B.
FIG. 10A is a view showing a state in which the upper side of a game controller case is hit, and FIG. 10B is a view showing an example of the waveform of a jerk based on each acceleration value detected by an acceleration sensor when the upper side of a game controller case has been hit.
FIG. 11A is a view showing a state in which the right side of a game controller case is hit, and FIG. 11B is a view showing an example of the waveform of a jerk based on each acceleration value detected by an acceleration sensor when the right side of a game controller case has been hit.
FIG. 12A is a front view showing a case main body according to a second embodiment, and FIG. 12B is a side view showing a case main body according to the second embodiment.
FIG. 13 is an exploded perspective view showing a case main body according to the second embodiment.
FIG. 14A is a front view showing a case main body according to a third embodiment, and FIG. 14B is a bottom view showing a case main body according to the third embodiment.
FIG. 15A is a front view showing a case main body according to a fourth embodiment, and FIG. 15B is a bottom view showing a case main body according to the fourth embodiment.

### BEST MODE FOR CARRYING OUT THE INVENTION

### First embodiment

A first embodiment to which the invention is applied is described below taking an example of a game controller case that receives a game controller that is attached to a consumer game device and includes an acceleration sensor.

### System configuration

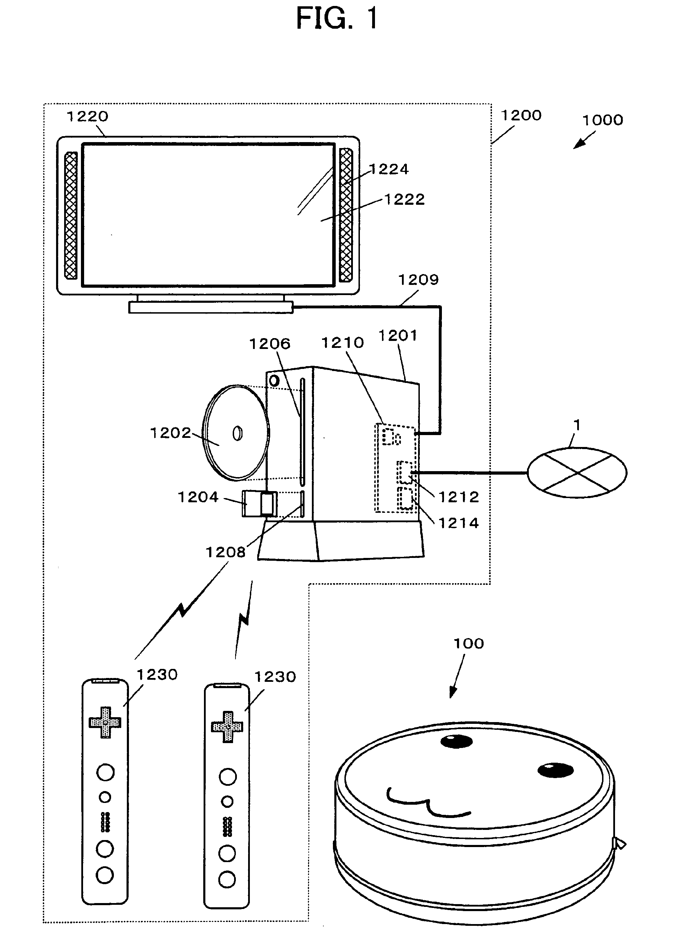

FIG. 1 is a view illustrative of a configuration example of a consumer game device 1200 according to this embodiment. The consumer game device 1200 includes a game device main body 1201, a game controller 1230, and a video monitor 1220.

The game device main body 1201 includes a control unit 1210 that includes a CPU, an image processing LSI, an IC memory, and the like, a reader 1206 that reads data from an optical disk 1202 (information storage medium), and a reader 1208 that reads data from a memory card 1204 (information storage medium). The consumer game device 1200 implements a given video game by reading a game program and setting data from the optical disk 1202 and the memory card 1204, and causing the control unit 1210 to perform various game calculations based on an operation input performed using the game controller 1230.

The control unit 1210 includes electrical/electronic instruments such as various processors (e.g., a central processing unit (CPU), a graphics processing unit (GPU), and a digital signal processor (DSP)), an application-specific integrated circuit (ASIC), and an IC memory, and controls each section of the consumer game device 1200.

The control unit 1210 includes a communication device 1212 that connects to a communication channel 1 (e.g., Internet, local area network (LAN), or wide area network (WAN)), and implements data communication with an external device. The control unit 1210 includes a short-distance wireless communication module 1214 that exchanges data with a plurality of game controllers 1230 via short-distance wireless communication. As the short-distance wireless communication method, Bluetooth (registered trademark), ultra-wideband (UWB) wireless communication, a wireless LAN, etc., may be appropriately applied.

The control unit 1210 generates a game image and game sound based on operation input signals received from the game controller 1230 to implement the video game. An image signal and a sound signal based on the game image and the game sound generated by the control unit 1210 are output to the video monitor 1220 (display monitor) connected to the game device main body 1201 via a cable 1209. The video monitor 1220 includes an image display device 1222 that displays an image, and a speaker 1224 that outputs sound. The player plays the game while watching a game image displayed on the image display device 1222 and listening to game sound output from the speaker 1224.

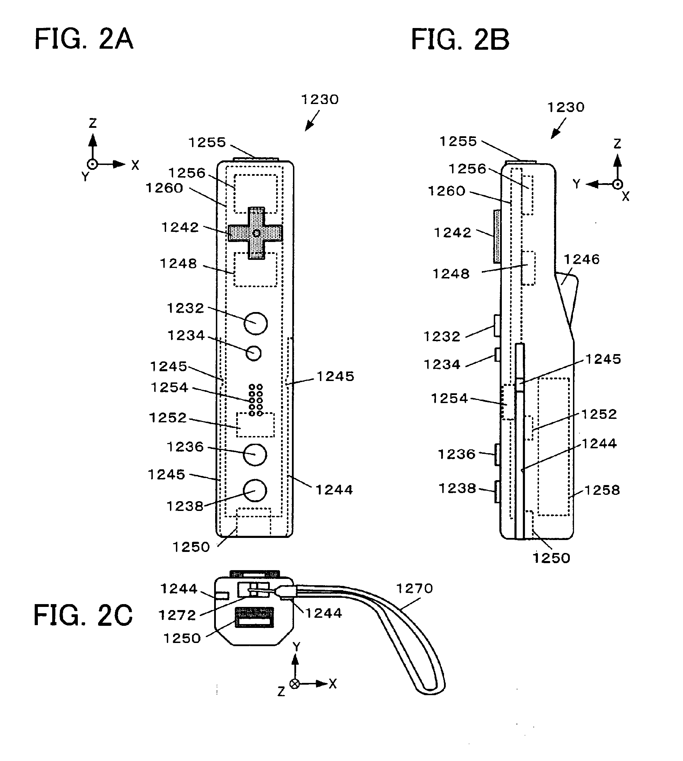

FIGS. 2A to 2C are external views showing a configuration example of the game controller 1230. FIG. 2A is a front view, FIG. 2B is a right side view, and FIG. 2C is a bottom view. As shown in FIGS. 2A to 2C, the game controller 1230 is in the shape of a rod that has a chamfered approximately square cross section. The player operates the game controller 1230 while holding the game controller 1230 with one hand as if to hold a rod.

The game controller 1230 is configured so that a built-in controller control unit 1260, an input device, and an output device are connected via a local bus circuit that is implemented by an inter-integrated circuit (IIC) bus or the like. The controller control unit 1260 controls input and output between each device.

Specifically, the game controller 1230 includes an A button 1232 and a B button 1234 that are provided at the front center (upper side), and a C button 1236 and a D button 1238 that are provided at the front bottom as switch input devices. The game controller 1230 includes an arrow key 1242 that is provided at the front top and allows the player to individually input the upward, downward, rightward, or leftward direction by pressing one of the four ends of the key. The game controller 1230 includes a trigger 1246 that is provided on the upper rear side.

The game controller 1230 further includes an acceleration sensor 1248 and an imaging element 1255.

The acceleration sensor 1248 detects accelerations in three perpendicular axial directions (i.e., the direction toward the end of the game controller 1230 in the longitudinal direction (upward direction in FIG. 2A) is a positive Z-axis direction, the rightward direction (rightward direction in FIG. 2A) is a positive X-axis direction, and the forward direction (leftward direction in FIG. 2B) is a positive Y-axis direction), and outputs detection signals (e.g., voltage) based on the detected accelerations to the controller control unit 1260.

The imaging element 1255 is implemented by a CCD sensor or a CMOS sensor. The imaging element 1255 is provided on the end of the game controller 1230. The imaging element 1255 images the state in front of the game controller 1230 in the longitudinal direction, and outputs an image signal to the controller control unit 1260.

The game controller 1230 according to this embodiment includes a vibrator 1252 and a speaker 1254 as the output devices.

The vibrator 1252 produces vibrations based on a vibration control signal output from the controller control unit 1260 so that the player who holds the game controller 1230 feels the vibrations.

The speaker 1254 generates sound based on a sound output signal output from the controller control unit 1260, and outputs the generated sound from the operation side.

The game controller 1230 according to this embodiment includes an extension terminal 1250 to which a communication cable that connects an operation input device and the output device is removably connected, and a strap holder 1272 that holds one end of a strap 1270.

The extension terminal 1250 is a terminal for connecting the local bus circuit provided in the controller control unit 1260 to the outside. A local bus according to this embodiment is implemented in accordance with the inter-integrated circuit (IIC) bus standard, for example. A connector having a given shape can be connected to the local bus via hot plug, and insertion or removal (connection) of a connector or a device can be detected by detecting the voltage of a connection pin included in the extension terminal 1250.

The controller control unit 1260 includes electronic components such as a microchip (e.g., CPU and a bus controller IC that controls data communication through the local bus circuit) and an IC memory, a short-distance wireless communication module 1256 that implements wireless communication with the short-distance wireless communication module 1214 of the game device main body 1201, and the like. The game device main body 1201 and the game controller 1230 communicate via wireless communication by utilizing the short-distance wireless communication module 1214 and the short-distance wireless communication module 1256. Note that the game device main body 1201 and the game controller 1230 may communicate via cable communication by utilizing a cable communication module.

The controller control unit 1260 generates an operation input signal based on signals transmitted from the input devices via the local bus circuit, and transmits the generated operation input signal to the game device main body 1201 via the short-distance wireless communication module 1256. When the controller control unit 1260 has received an output signal transmitted from the game device main body 1201 through the short-distance wireless communication module 1256, the controller control unit 1260 generates and transmits a control signal to the output device corresponding to the received output signal.

Power required for the controller control unit 1260 and each section is supplied from a battery 1258 provided in a battery chamber formed in the rear side of the game controller 1230.

A fitting groove 1244 is formed in each side surface of the game controller 1230 from the rear end toward the front end of the game controller 1230. A depression 1245 is formed at the bottom of the fitting groove 1244 at a position near the front end thereof so that the depth of the fitting groove 1244 increases partially.

### Configuration of game controller case

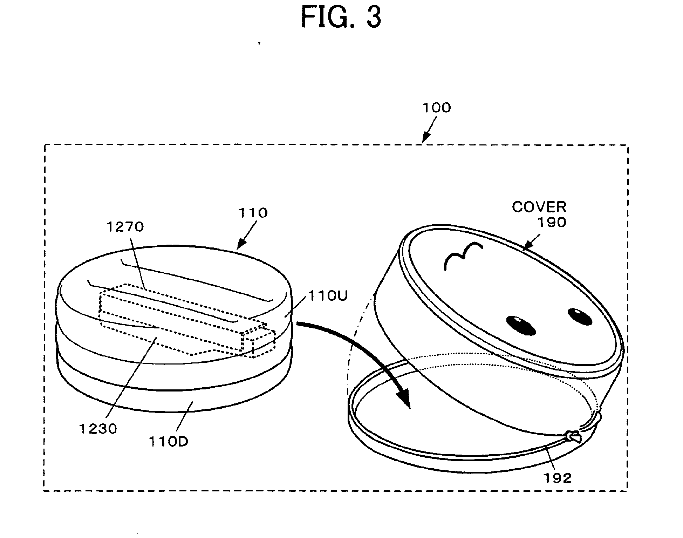

FIG. 3 is a perspective view showing a configuration example of the game controller case 100 according to this embodiment. The game controller case 100 according to this embodiment includes a switch cover 1270, a case main body 110 that receives the game controller 1230 that is fitted with the switch cover 1270, and a cover 190 that covers the entire case main body 110.

The cover 190 is designed to imitate a character that appears in the game, for example. The inner dimensions of the cover 190 are set so that the case main body 110 placed inside the cover 190 does not move inside the cover 190 even when the cover 190 is carried in a state in which the game controller 1230 is placed therein.

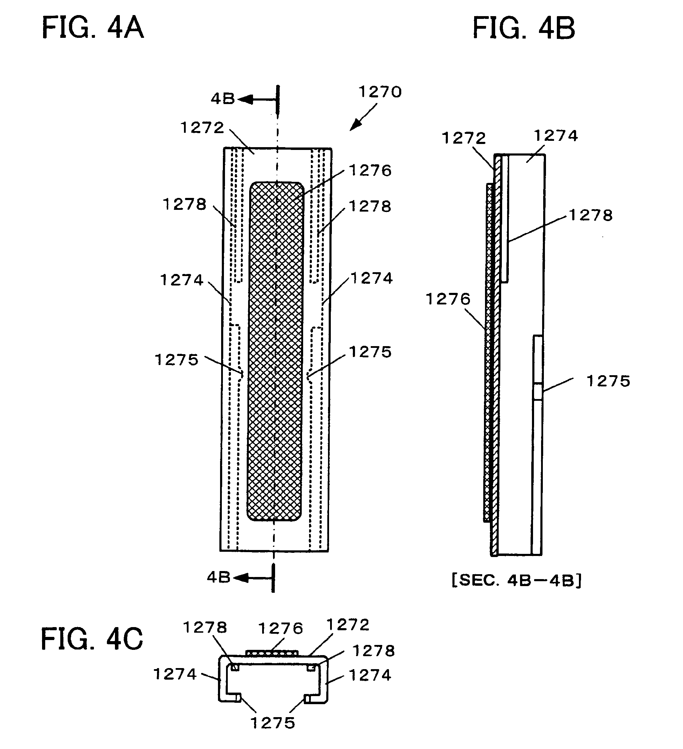

FIGS. 4A to 4C are views showing a configuration example of the switch cover 1270 according to this embodiment. FIG. 4A is a front view, FIG. 4B is a cross-sectional view along the line 4B-4B, and FIG. 4C is a bottom view.

The switch cover 1270 cover the front side of the game controller 1230. Specifically, the switch cover 1270 includes a cover main body 1272 that is formed of a rectangular plate material that extends in the longitudinal direction and covers the button switches (A button 1232, B button 1234, C button 1236, D button 1238, and arrow key 1242) provided on the front side of the game controller 1230, an engagement arm section 1274 that extends from the edge of each side of the cover main body 1272, an antiskid member 1276 that is provided on the front side of the cover main body 1272, and a leg section 1278 that protrudes from the rear side of the front end of the cover main body 1272.

The length of the engagement arm section 1274 is set to be greater than the distance between the fitting groove 1244 and the area of the A button 1232, the B button 1234, the C button 1236, the D button 1238, or the arrow key 1242 that protrudes from the front side of the game controller 1230 to a maximum extent. The thickness of the engagement arm section 1274 (particularly the bent portion) is set so that the engagement arm section 1274 can be loosely fitted into the fitting groove 1244 of the game controller 1230. A protrusion 1275 is formed corresponding to the depth of the depression 1245. The engagement arm sections 1274 are bent in an area from the rear end to the middle in the longitudinal direction so that the ends of the engagement arm sections 1274 face each other. The protrusion 1275 is provided at a position near the front end of the bent portion of the engagement arm section 1274 so that the protrusion 1275 extends in the bending direction.

The antiskid member 1276 is implemented by applying an antiskid paint, or attaching a silicone rubber sheet, for example.

The leg section 1278 is a protrusion that protrudes along the longitudinal direction of the cover main body 1272 at each side edge of the rear side of the front end of the cover main body 1272. The protrusion height of the leg section 1278 may be appropriately set so that the rear side of the front end of the cover main body 1272 does not come in contact with the upper side of the push switch of the game controller 1230 in a state in which the switch cover 1270 is fitted into the game controller 1230.

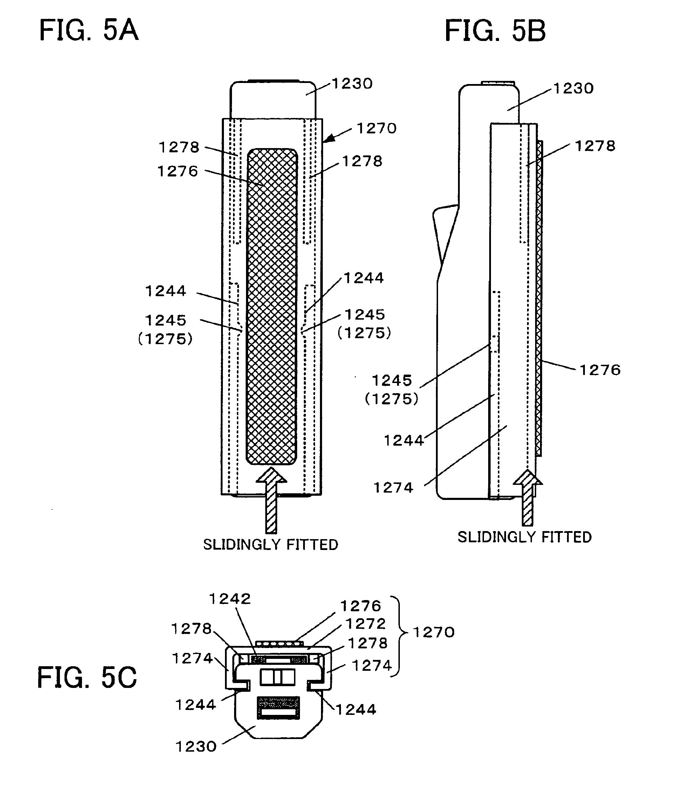

FIGS. 5A to 5C are views showing a state in which the switch cover 1270 is fitted into the game controller 1230. FIG. 5A is a front view, FIG. 5B is a left side view, and FIG. 5C is a bottom view. As shown in FIGS. 5A to 5C, when the cover main body 1272 is slidingly fitted into the game controller 1230 so that the bent portion of the engagement arm section 1274 is fitted into the fitting groove 1244 of the game controller 1230 such that the cover main body 1272 is almost parallel to the front side of the game controller 1230, the protrusion 1275 engages the depression 1245 so that the cover main body 1272 stops.

Since the length of the engagement arm section 1274 is set to be greater than the distance between the fitting groove 1244 and the area of the A button 1232, the B button 1234, the C button 1236, the D button 1238, or the arrow key 1242 that protrudes from the front side of the game controller 1230 to a maximum extent, the cover main body 1272 covers the upper side of the button switches so that a situation in which the button switches are erroneously pressed due to external contact can be prevented.

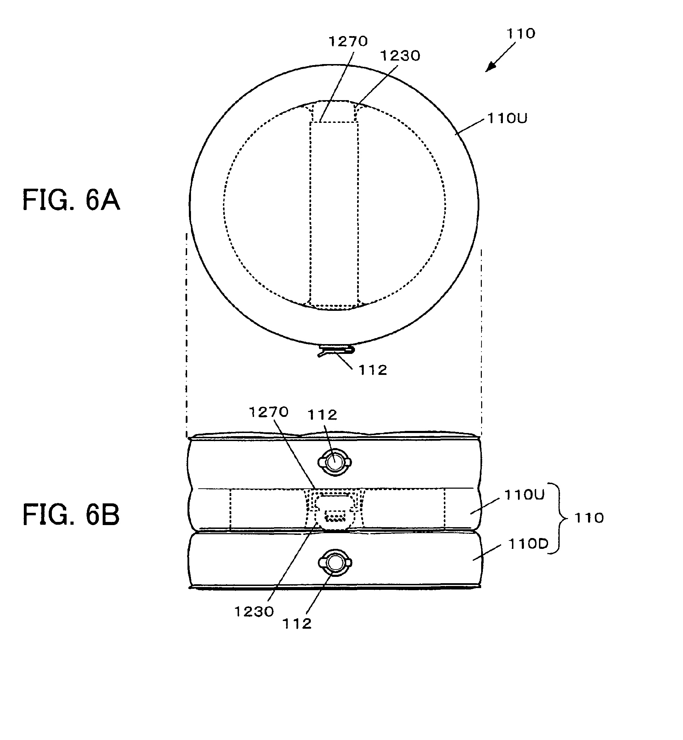

FIGS. 6A and 6B are views showing a configuration example of the case main body 110 according to this embodiment. FIG. 6A is a front view (=top view), and FIG. 6B is a side view. Note that the forward direction, the rearward direction, the leftward direction, and the rightward direction of the case main body 110 respectively refer to the upward direction, the downward direction, the leftward direction, and the rightward direction in FIG. 6A, and the front (upper) side and the rear (lower) side of the case main body 110 respectively refer to the upper side and the lower side in FIG. 6B. Specifically, the direction of the case main body 110 is the same as the direction of the game controller 1230 in a state in which the game controller 1230 is placed in the case main body 110.

The case main body 110 has a columnar shape that can receive the game controller 1230 in a state in which the game controller 1230 is placed sideways along the diametrical direction. The case main body 110 includes an upper case section 110U and a lower case section 110D. The upper case section 110U and the lower case section 110D are joined (assembled) before use.

The upper case section 110U and the lower case section 110D are formed of an inflatable bag made of vinyl chloride, for example. Each of the upper case section 110U and the lower case section 110D has an air inlet 112. A player inflates the upper case section 110U and the lower case section 110D before use by blowing air into the air inlet 112. Each of the upper case section 110U and the lower case section 110D functions as a sub-air chamber. The upper case section 110U and the lower case section 110D inflate due to the pressure of air introduced into the upper case section 110U and the lower case section 110D, and are joined (assembled) to form an external shape shown in FIGS. 6A and 6B.

Note that the case main body 100 may be produced by appropriately utilizing known technology applied to inflatable vinyl products.

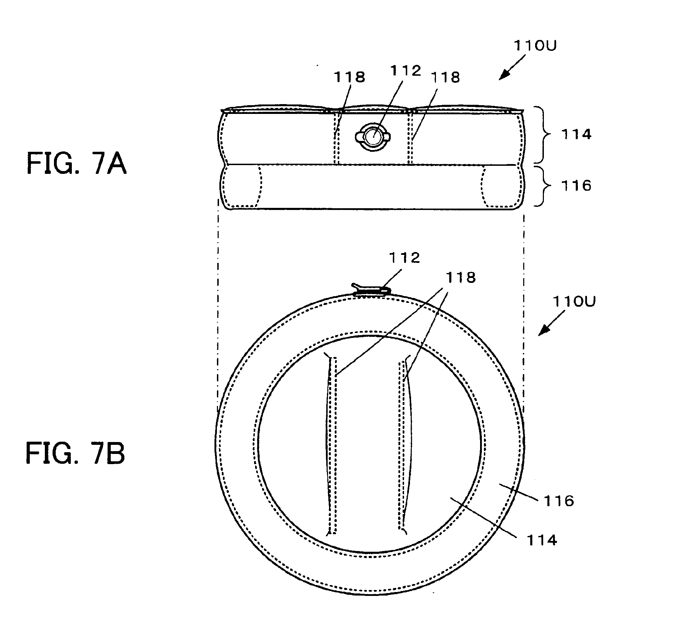

FIGS. 7A and 7B are external views showing an example of the upper case section 110U. FIG. 7A is a side view, and FIG. 7B is a rear side view (=bottom view).

The upper case section 110U has an external shape in which a circular protrusion 116 is provided at the outer edge of the rear side of a flat columnar base section 114. The inner diameter of the circular protrusion 116 is set to be almost equal to or slightly larger than the total length of the game controller 1230. The protrusion height of the circular protrusion 116 is set to be almost equal to or slightly larger than the total height (i.e., the horizontal dimension in FIG. 5B or the vertical dimension in FIG. 5C) of the game controller 1230 and the switch cover 1270 that is fitted into the game controller 1230.

An inner wall 118 may be appropriately provided so that the upper side of the upper case section 110U becomes as flat as possible when air is blown into the upper case section 110U.

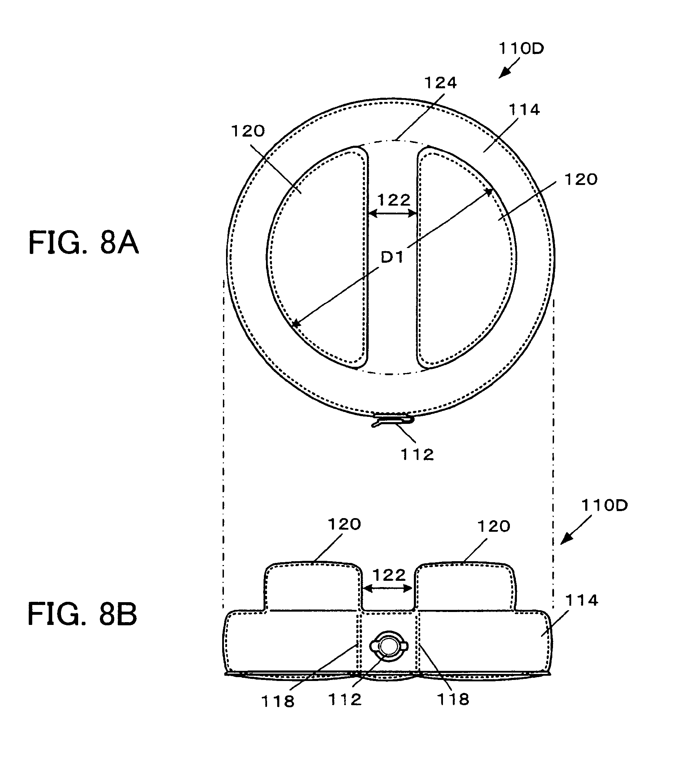

FIGS. 8A and 8B are external views showing an example of the lower case section 110D according to this embodiment. FIG. 8A is a front view (=top view), and FIG. 8B is a side view.

The lower case section 110D has an external shape in which two semicircular protrusions 120 that have an approximately semicircular shape when viewed from above are provided on the front side of a flat columnar base section 114 so that the linear sections of the semicircular protrusions 120 face each other such that a space 122 is formed therebetween. The space 122 is set to be almost equal to or slightly larger than the total width of the game controller 1230 and the switch cover 1270 that is fitted into the game controller 1230 (i.e., the horizontal dimension in FIG. 5A).

A diameter D1 of a circle 124 that connects the curved surfaces of the semicircular protrusions 120 based on the curvature is set to be almost equal to or slightly smaller than the inner diameter of the circular protrusion 116 of the upper case section 110U. The protrusion height of the semicircular protrusion 120 is set to be almost equal to or slightly smaller than the total height of the game controller 1230 and the switch cover 1270 that is fitted into the game controller 1230.

An inner wall 118 may be appropriately provided so that the upper side of the lower case section 110D becomes as flat as possible when air is blown into the lower case section 110D in the same manner as in the upper case section 110U.

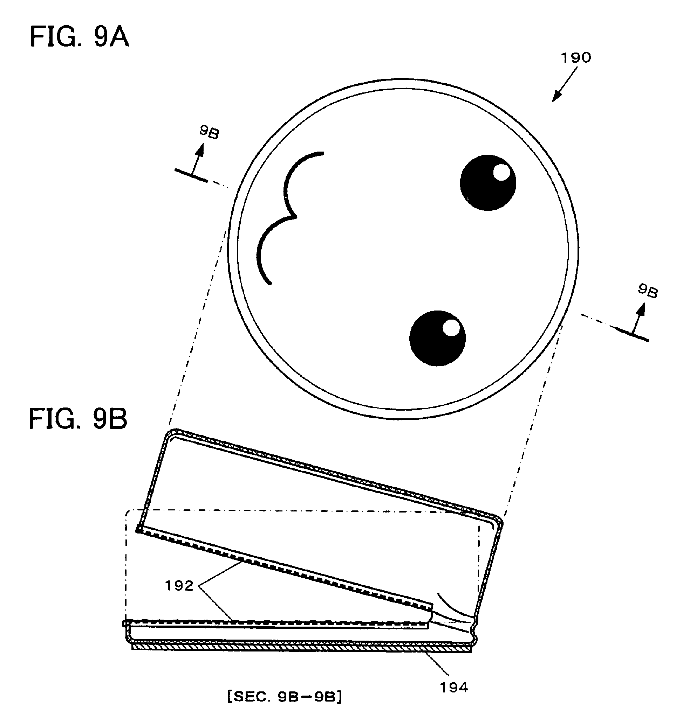

FIGS. 9A and 9B are views showing a configuration example of the cover 190 according to this embodiment. FIG. 9A is a front view (=top view), and FIG. 9B is a cross-sectional view along the line 9B-9B.

The cover 190 is made of cloth. The face of a character or the like is drawn on the front side of the cover 190. The cover 190 is generally designed to imitate the character. The inner dimensions of the cover 190 are set so that the case main body 110 placed in the cover 190 does not move inside the cover 190 even when the cover 190 is carried in a state in which the game controller 1230 is placed therein. The direction of the cover 190 is the same as the direction of the case main body 110 in a state in which the case main body 110 is placed in the cover 190. A zipper 192 is provided at the lower side surface of the cover 190 along the outer circumference of the cover 190, so that the cover 190 can be opened and closed. An antiskid member 194 is attached to the lower side (rear side) of the cover 190.

### Usage of game controller case

The game controller case 100 is assembled before use. Specifically, the switch cover 1270 is fitted into the game controller 1230, and the upper case section 110U and the lower case section 110D are inflated.

The game controller 1230 is fitted into the space 122 of the lower case section 110D of the case main body 110. The upper case section 110U is then placed on the lower case section 110D so that the semicircular protrusions 120 of the lower case section 110D are fitted inside the circular protrusion 116 of the upper case section 110U. The case main body 110 is thus assembled.

The case main body 110 is placed inside the cover 190 so that the front side (upper side) of the case main body 110 is positioned under the front side (upper side) of the cover 190, and the zipper 192 is closed. The game controller case 100 is thus completed.

The space 122 of the game controller case 100 thus assembled is a closed space that is enclosed by the air chambers formed by the upper case section 110U and the lower case section 110D.

Since the upper case section 110U and the lower case section 110D have been inflated with air, the inner walls of the closed space bulge toward the center of the closed space to some extent. When the game controller 1230 that is fitted with the switch cover 1270 is placed in the closed space, the game controller 1230 is held in a state in which pressure is applied to the outer circumferential surface of the game controller 1230.

Since the upper side of the push switches provided on the front side of the game controller 1230 is covered with the switch cover 1270, a situation in which the push switches are erroneously pressed can be prevented even under a pressure contact environment. The air chambers formed by the upper case section 110U and the lower case section 110D function as a buffer.

When the player has hit the game controller case 100 as if to beat a drum, the acceleration sensor 1248 of the game controller 1230 detects accelerations due to the hitting operation. The detected acceleration signal is transmitted to the game device main body 1201, and utilized for the game process.

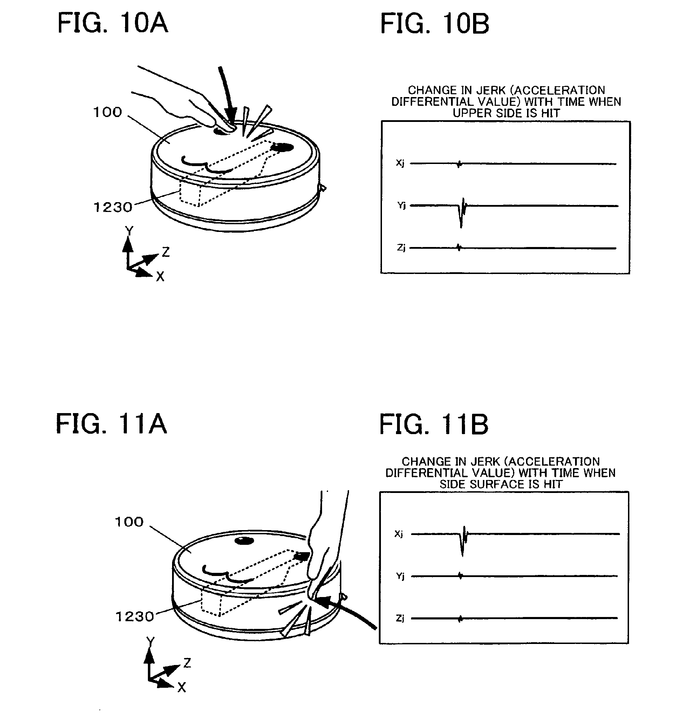

FIGS. 10A and 10B are views showing an example in which the player hits the upper side of the game controller case 100. FIG. 10A is an external view, and FIG. 10B is a view showing an example of the waveform of a jerk based on each acceleration value detected by the acceleration sensor 1248. The term "jerk" refers to a differential acceleration value, and is also referred to as "quick change".

As shown in FIGS. 10A and 10B, when calculating a jerk of the acceleration along each of the X, Y, and Z axes detected by the acceleration sensor 1248 when the upper side (=front side) of the game controller case 100 has been hit, a spike-like change is detected as a jerk (Yj) of the Y-axis acceleration, but only a small change is detected as a jerk of the X-axis acceleration and a jerk of the Z-axis acceleration. Therefore, a change (jerk) in the Y-axis acceleration that is equal to or larger than a reference value may be utilized as an operation input.

FIGS. 11A and 11B are views showing an example in which the player hits the right side of the game controller case 100. FIG. 11A is an external view, and FIG. 11B is a view showing an example of the waveform of a jerk based on each acceleration value detected by the acceleration sensor 1248. As shown in FIGS. 11A and 11B, when calculating a jerk of the acceleration along each of the X, Y, and Z axes detected by the acceleration sensor 1248 when the right side of the game controller case 100 has been hit, a spike-like change is detected as a jerk (Xj) of the X-axis acceleration, but only a small change is detected as a jerk of the Y-axis acceleration and a jerk of the Z-axis acceleration. Therefore, a change (jerk) in the X-axis acceleration that is equal to or larger than a reference value may be utilized as an operation input.

### Second embodiment

A second embodiment to which the invention is applied is described below. The second embodiment is basically the same as the first embodiment, but differs from the first embodiment as to the configuration of the case main body 110. Note that the elements that have been described in connection with the first embodiment are indicated by identical symbols. Description of these elements is omitted.

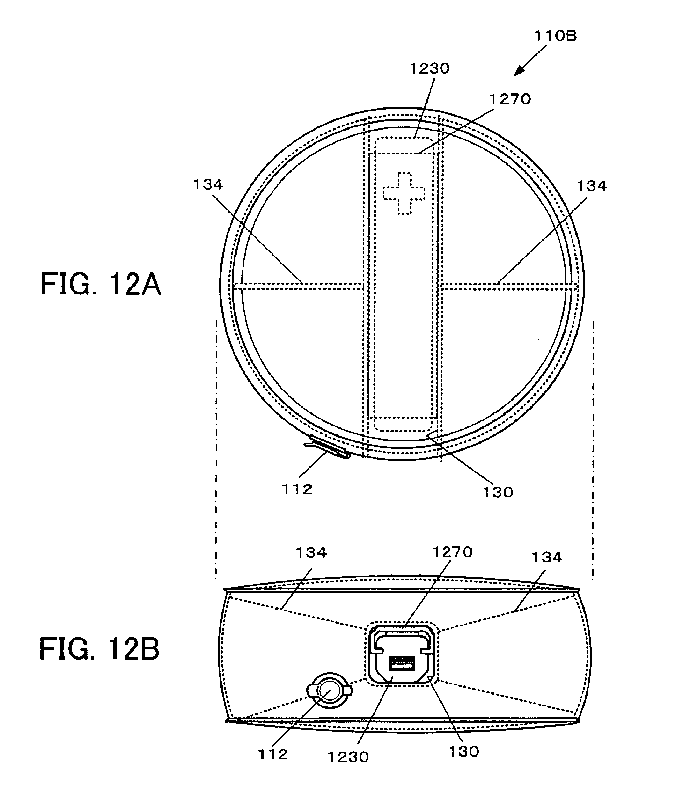

FIGS. 12A and 12B are external views showing a case main body 110B according to this embodiment. FIG. 12A is a front view of the case main body 110B, and FIG. 12B is a side view of the case main body 110B. The case main body 110B has a columnar external shape that can receive the game controller 1230 fitted with the switch cover 1270 in a state in which the game controller 1230 is placed along the diametrical direction, in the same manner as the case main body 110 according to the first embodiment. The case main body 110B is formed of an inflatable bag made of vinyl chloride, for example. The air inlet 112 is provided on the side surface of the case main body 110B. The player inflates the case main body 110B by blowing air before use so that the case main body 110B forms an external shape shown in FIGS. 12A and 12B due to the pressure of air introduced into a single air chamber.

The case main body 110B includes a controller receiving section 130 that is formed through the case main body 110B in the diametrical direction. The height (inner dimension) of the controller receiving section 130 is set to be slightly greater than the total height of the game controller 1230 that is fitted with the switch cover 1270, and the width (inner dimension) of the controller receiving section 130 is set to be slightly greater than the total width of the game controller 1230 that is fitted with the switch cover 1270.

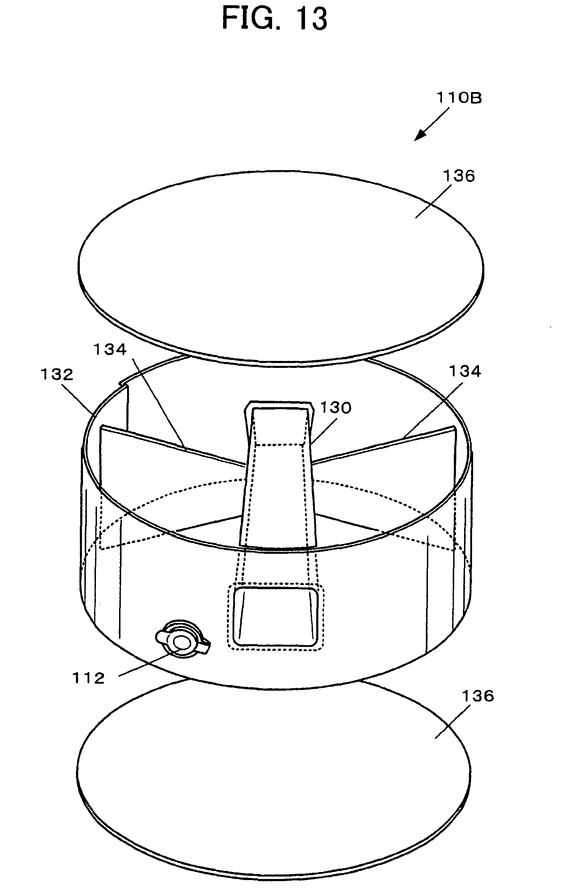

FIG. 13. is an exploded perspective view showing the case main body 110B according to this embodiment.

Known technology applied to inflatable vinyl products may be appropriately applied to the structure and the assembly method of the case main body 110B. For example, the following structure and assembly method may be employed. Specifically, the outer circumference of the opening at each end of the controller receiving section 130 that has been formed in advance in a tubular shape is bonded to a case side surface member 132. The ends of a sheet-shaped partition member 134 are bonded to the sidewall of the controller receiving section 130 and the case side surface member 132, respectively.

The longitudinal ends of the case side surface member 132 are bonded to obtain a circular body. A lid section 136 formed of a circular sheet is bonded to the case side surface member 132 (circular body) so that each of the upper opening and the lower opening of the case side surface member 132 is covered with the lid section 136. The case main body 110B is thus completed. It is preferable to dispose the controller receiving section 130 and the partition member 134 so that the controller receiving section 130 is approximately perpendicular to the partition member 134 when viewed from above (see FIG. 12A) upon inflation of the case main body 110B. The case side surface member 132 is provided in advance with the air inlet 112.

When using the game controller case, the case main body 110B is inflated by blowing air into the air inlet 112. The game controller 1230 that is fitted with the switch cover 1270 is inserted into the controller receiving section 130, and the case main body 110B is placed in the cover 190.

Since the inner wall of the controller receiving section 130 bulges toward the center of the controller receiving section 130 due to the pressure of air introduced into the case main body 110B, the game controller 1230 is held so that the game controller 1230 does not move due to contact pressure applied from all sides. The antiskid member 1276 of the switch cover 1270 comes in pressure contact with the inner wall of the upper side of the controller receiving section 130, so that the position of the game controller 1230 is reliably maintained.

### Third embodiment

A third embodiment to which the invention is applied is described below. The third embodiment is basically the same as the first embodiment, but differs from the first embodiment as to the shape and the structure of a case main body 110C. Note that the elements that have been described in connection with the first embodiment are indicated by identical symbols. Description of these elements is omitted.

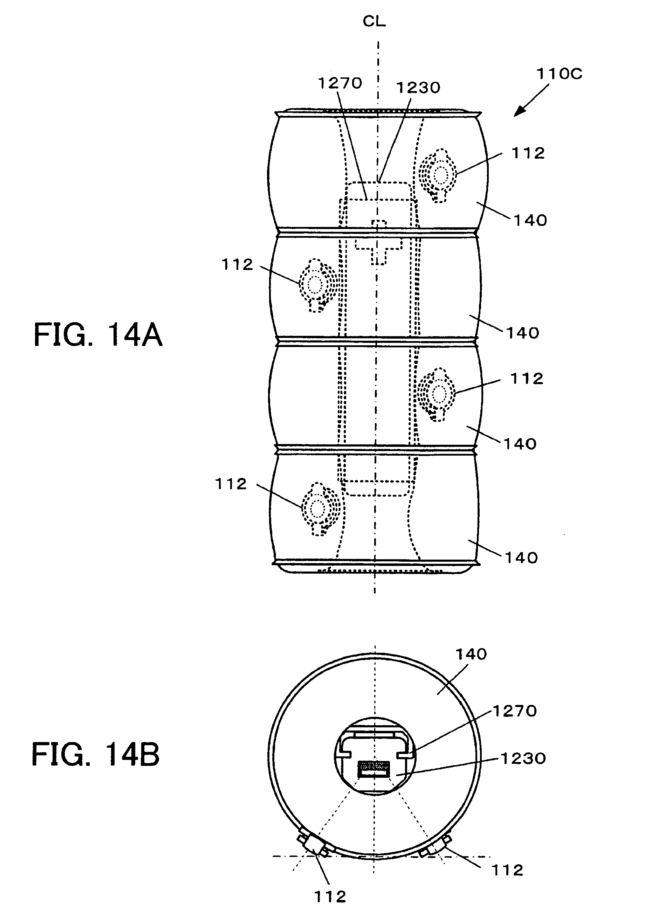

FIGS. 14A and 14B are external views showing a configuration example of the case main body 110C according to this embodiment. FIG. 14A is a front view (=top view), and FIG. 14B is a bottom view. As shown in FIGS. 14A and 14B, the case main body 110C is formed by coaxially connecting (bonding) a plurality of doughnut-shaped sub-air chambers 140 formed of an inflatable vinyl product. The case main body 110C generally has a tubular external shape that is longer than the total length of the game controller 1230 that is fitted with the switch cover 1270.

The inner diameter of the space that is formed at the center of the sub-air chamber 140 is set to be slightly greater than either of the total height or the total width of the game controller 1230 that is fitted with the switch cover 1270 that is greater than the other.

Each sub-air chamber 140 is provided with the air inlet 112. As shown in FIG. 14A, the air inlets 112 are alternately disposed on the right side and the left side with respect to a center axis CL. As shown in FIG. 14B, the sub-air chambers 140 are connected (bonded) so that the air inlets 112 are positioned to function as a stop for the case main body 110C when viewed from the upper side or the lower side. Specifically, the sub-air chambers 140 are connected so that the air inlets 112 that are alternately disposed on the right side and the left side with respect to the center axis CL serve as leg sections that protrude from the tube diagonally downward when placing the case main body 110C sideways so that the air inlets 112 are positioned at the bottom of the case main body 110C. Note that a leg section may be provided to the sub-air chamber 140 instead of using the air inlet 112 as the leg section.

When using the game controller case, each sub-air chamber 140 is inflated by blowing air. The game controller 1230 that is fitted with the switch cover 1270 is inserted into the passage that is formed at the center of the tube. Since the inner wall of the passage bulges inward, the position of the game controller 1230 that has been inserted into the passage is maintained due to contact pressure applied from all sides. The antiskid member 1276 of the switch cover 1270 comes in pressure contact with the inner wall of the passage, so that the position of the game controller 1230 is reliably maintained.

When covering the case main body 110C in the same manner as in the first embodiment, a columnar cover similar to the case main body 110C is used.

### Fourth embodiment

A fourth embodiment to which the invention is applied is described below. The fourth embodiment is basically the same as the first embodiment, but differs from the first embodiment as to the shape and the structure of a case main body 110D. Note that the elements that have been described in connection with the first embodiment are indicated by identical symbols. Description of these elements is omitted.

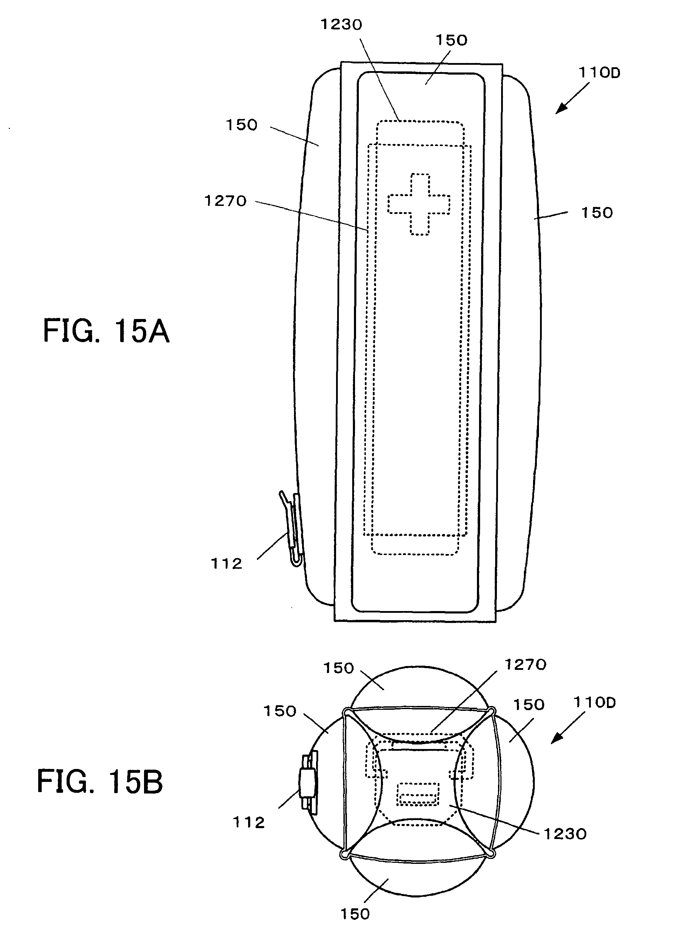

FIGS. 15A and 15B are external views showing a configuration example of the case main body 110D according to this embodiment. FIG. 15A is a front view (=top view), and FIG. 15B is a bottom view. The case main body 110D is formed by connecting the ends of an inflatable vinyl sheet that is provided with four sub-air chambers 150 that extend in the longitudinal direction, and has a tubular shape in which the sub-air chamber 150 is positioned on each side. A receiving space into which the game controller 1230 that is fitted with the switch cover 1270 is inserted is formed at the center of the case main body 110D.

The total length of the sub-air chamber 150 is set to be greater than that of the game controller 1230. The sub-air chambers 150 are connected so that all of the sub-air chambers 150 are inflated by blowing air into one air inlet 112.

In this embodiment, the case main body 110D is formed in a tubular shape in advance. Note that the case main body 110D may be in the shape of a sheet provided with a hook-and-loop fastener on each end, and may be wrapped around the game controller 1230 that is fitted with the switch cover 1270.

The number of sub-air chambers 150 may be appropriately selected.

### Modifications

The embodiments to which the invention is applied and the modifications thereof have been described above. Note that the invention is not limited thereto. The elements may be appropriately modified or omitted, or other elements may be appropriately added without departing from the scope of the invention.

For example, the above embodiments have been described taking an example in which the user inflates the game controller case by blowing air. Note that the game controller case may be provided in a state in which the game controller case is filled with a given gas (e.g., nitrogen gas). The game controller case may be filled with a gel-like material instead of gas. The second to fourth embodiments have been described taking an example in which the passage formed at the center of the tube is used as the receiving section that receives the game controller 1230 that is fitted with the switch cover 1270. Note that the passage need not necessarily be formed through the game controller case. The front end (upper side in FIG. 12A, for example) of the passage may be closed (i.e., the passage may be a depression). Since the depression is an inner space that is longer than the total length of the game controller 1230, the entire game controller 1230 can be placed in the depression.

## Claims

1. A game controller case (100) **characterized by**:
a buffer air chamber and an air inlet (112);
wherein the buffer air chamber section inflates due to pressure of air introduced into the buffer air chamber section from the air inlet (112), and forms an inner space as a receiving section (130);
the receiving section (130) being configured to receive a game controller (1230) that includes an acceleration detection section (1248) and a transmission section (1256) that transmits a detection signal output from the acceleration detection section (1248) to a game device main body (1201), and hold the game controller (1230) by coming in pressure contact with the game controller around the game controller, enclosing the game controller.

2. The game controller case as defined in claim 1,
the buffer air chamber section including a plurality of sub-air chamber sections that form the inner space upon assembly.

3. The game controller case as defined in claim 1 or 2,
the receiving section (130) being a passage that is formed through the buffer air chamber section; and
the receiving section (130) being configured to hold the game controller (1230) that is inserted into the passage by coming in pressure contact with the game controller around the game controller.

4. The game controller case as defined in claim 1 or 2,
the receiving section (130) being a depression that is formed in the buffer air chamber section and can receive the entire game controller (1230); and
the receiving section (130) being configured to hold the game controller (1230) that is inserted into the receiving section by coming in pressure contact with the game controller around the game controller.

5. The game controller case as defined in any one of claims 1 to 4, further comprising:
a switch cover section (1270) that can be removably fitted into the game controller (1230), and prevents an erroneous operation of a switch included in the game controller.

6. The game controller case as defined in any one of claims 1 to 5, further comprising:
a cover section (190) that covers an outer circumferential surface of the buffer air chamber section.

7. The game controller case as defined in any one of claims 1 to 6,
the buffer air chamber section being made of vinyl.

## Patentansprüche

1. Spielsteuerungsgehäuse (100), **gekennzeichnet durch**:
eine Pufferluftkammer und einen Lufteinlass (112);
wobei die Pufferluftkammersektion sich aufgrund von Druck von von dem Lufteinlass (112) in die Pufferluftkammersektion eingeleiteter Luft aufbläst und einen Innenraum als eine aufnehmende Sektion (130) ausbildet;
wobei die aufnehmende Sektion (130) zum Aufnehmen einer Spielsteuerung (1230), die eine Beschleunigungsdetektionssektion (1248) und eine Übertragungssektion (1256) enthält, die ein von der Beschleunigungsdetektionssektion (1248) ausgegebenes Detektionssignal an einen Spieleinrichtungshauptkörper (1201) überträgt, und zum Halten der Spielsteuerung (1230), indem sie in Druckkontakt mit der Spielsteuerung um die Spielsteuerung herum kommt, die Spielsteuerung einschließend, konfiguriert ist.

2. Spielsteuerungsgehäuse nach Anspruch 1,
wobei die Pufferluftkammersektion mehrere Teilluftkammersektionen enthält, die bei Montage den Innenraum ausbilden.

3. Spielsteuerungsgehäuse nach Anspruch 1 oder 2,
wobei die aufnehmende Sektion (130) eine Passage ist, die durch die Pufferluftkammersektion ausgebildet ist; und
die aufnehmende Sektion (130) zum Halten der Spielsteuerung (1230) konfiguriert ist,
die in die Passage eingeführt wird, indem sie in Druckkontakt mit der Spielsteuerung um die Spielsteuerung herum kommt.

4. Spielsteuerungsgehäuse nach Anspruch 1 oder 2,
wobei die aufnehmende Sektion (130) eine Vertiefung ist, die in der Pufferluftkammersektion ausgebildet ist und die ganze Spielsteuerung (1230) aufnehmen kann; und
die aufnehmende Sektion (130) zum Halten der Spielsteuerung (1230) konfiguriert ist,
die in die aufnehmende Sektion eingeführt wird, indem sie in Druckkontakt mit der Spielsteuerung um die Spielsteuerung herum kommt.

5. Spielsteuerungsgehäuse nach einem der Ansprüche 1 bis 4, das weiterhin Folgendes umfasst:
eine Schalterabdeckungssektion (1270), die entfernbar in die Spielsteuerung (1230) eingesetzt werden kann und eine irrtümliche Betätigung eines in der Spielsteuerung enthaltenen Schalters verhindert.

6. Spielsteuerungsgehäuse nach einem der Ansprüche 1 bis 5, das weiterhin Folgendes umfasst:
eine Abdeckungssektion (190), die eine äußere Umfangsoberfläche der Pufferluftkammersektion abdeckt.

7. Spielsteuerungsgehäuse nach einem der Ansprüche 1 bis 6, wobei die Pufferluftkammersektion aus Vinyl hergestellt ist.

## Revendications

1. Boîtier d'unité de commande de jeu (100), **caractérisé par** :
une chambre à air tampon et une admission d'air (112) ;
dans lequel la section de chambre à air tampon se gonfle en raison de la pression d'air introduite dans la section de chambre à air tampon depuis l'admission d'air (112), et forme un espace interne faisant office de section réceptrice (130) ;
la section réceptrice (130) étant configurée pour recevoir une unité de commande de jeu (1230) qui comporte une section de détection d'accélération (1248) et une section de transmission (1256) qui transmet un signal de détection produit en sortie par l'unité de détection d'accélération (1248) vers un corps principal de dispositif de jeu (1201), et retenir l'unité de commande de jeu (1230) en venant en contact par pression avec l'unité de commande de jeu autour de l'unité de commande de jeu, enfermant l'unité de commande de jeu.

2. Boîtier d'unité de commande de jeu selon la revendication 1,
la section de chambre à air tampon comportant une pluralité de sous-sections de chambre à air qui au montage forment l'espace interne.

3. Boîtier d'unité de commande de jeu selon la revendication 1 ou 2,
la section réceptrice (130) étant un passage formé à travers la section de chambre à air tampon ; et
la section réceptrice (130) étant configurée pour retenir l'unité de commande de jeu (1230) qui est insérée dans le passage en venant en contact par pression avec l'unité de commande de jeu autour de l'unité de commande de jeu.

4. Boîtier d'unité de commande de jeu selon la revendication 1 ou 2,
la section réceptrice (130) étant une dépression formée dans la section de chambre à air tampon et pouvant recevoir la totalité de l'unité de commande de jeu (1230) ; et
la section réceptrice (130) étant configurée pour retenir l'unité de commande de jeu (1230) qui est insérée dans la section réceptrice en venant en contact par pression avec l'unité de commande de jeu autour de l'unité de commande de jeu.

5. Boîtier d'unité de commande de jeu selon l'une quelconque des revendications 1 à 4, comprenant en outre :
une section de couvercle de commutateur (1270) qui peut être montée de façon amovible dans l'unité de commande de jeu (1230) et empêche un fonctionnement erroné du commutateur inclus dans l'unité de commande de jeu.

6. Boîtier d'unité de commande de jeu selon l'une quelconque des revendications 1 à 5, comprenant en outre :
une section de couvercle (190) qui recouvre une surface circonférentielle externe de la section de chambre à air tampon.

7. Boîtier d'unité de commande de jeu selon l'une quelconque des revendications 1 à 6, la section de chambre à air tampon étant réalisée en vinyle.
